# EUROPÄISCHE PATENTSCHRIFT

(11) **EP 1 688 291 B1**
(45) Veröffentlichungstag und Bekanntmachung des Hinweises auf die Patenterteilung: **22.12.2010**
(21) Anmeldenummer: 06450019.2
(22) Anmeldetag: 02.02.2006
(51) Int. Cl.: B60K 6/12

(54) **Antrieb mit Elektroofen**
Power-drive based on electric furnace
Propulsion par four électrique

(30) Priorität: 07.02.2005 AT 1962005
(43) Veröffentlichungstag der Anmeldung: 09.08.2006
(73) Patentinhaber: Sharif, Issam, 1020 Wien (AT)
(72) Erfinder: Sharif, Issam, 1020 Wien (AT)

(56) Entgegenhaltungen:
- EP-A- 0 333 624
- DE-C- 62 412
- US-A- 1 527 292
- US-A- 4 104 955

## Beschreibung

Die Erfindung betrifft einen Antrieb mit Elektroofen mit einem Elektroofen bestehend aus einer Kammer, einem Gehäuse, einer Schicht aus einem Material zur Eindämmung von Wärme, einer Metallmasse in Form eines hitzebeständigen Stahls, einer Einlassleitung, einer Auslassleitung, zwei Zylindern zum Schutz gegen Wärmestrahlung, zwei elektromagnetisch betätigten Sperrorganen, einer Vakuumpumpe, einem Kabel und einem Stecker bzw. einem "Bügel (Stromabnehmer)", einem Kompressor, einem Dreiwegventil, zwei Verbindungsleitungen, einem Motor bestehend aus zwei Zylindern, zwei Kolben, zwei Auslassventilen und einer Kurbelwelle, einer Antriebswelle, einer Lichtmaschine und einer Batterie.

Eine Reihe von Verbrennungsmotor- und Elektroantrieben sind aus dem Stand der Technik bekannt. Nachteilig bei den Verbrennungsmotorantrieben ist die Tatsache, dass sie von teuren nicht erneuerbaren Treibstoffen abhängig sind und dass sie diese Treibstoffe unwirtschaftlich in Nutzleistung verwandeln. Wie bekannt ist, verwandelt ein Verbrennungsmotor ungefähr nur ein Drittel der Kraftstoffenergie in Nutzleistung. Ein weiterer Nachteil bei Otto- und Dieselmotoren ist die Tatsache, dass sie ungeheure Umweltverschmutzung verursachen. Nachteilig bei den Elektroantrieben auf der Grundlage von elektrischen Batterien ist die Tatsache, dass das Verhältnis der Speicherkapazität der Batterien zum Eigengewicht sehr gering ist. Ein weiterer Nachteil ist die Tatsache, dass die notwendige Lade Zeit der Batterien ziemlich lang ist. Daher bieten die elektrischen Batterien keinen potentiellen Ersatz für die Verbrennungsmotoren. Nachteilig bei den Elektroantrieben auf der Grundlage von Verbrennung von Wasserstoff in Brennstoffzellen sind die hohen Kosten. Wie bekannt ist, werden 5 Stromeinheiten in der Elektrolysezelle verzehrt um die Ersetzung der notwendigen Mengen von Wasser- und Sauerstoff für die Erzeugung einer Stromeinheit durch die Brennstoffzelle zu sichern. Dazu kommen die hohen Beschaffungskosten der relevanten Anlagen und der aufwendige Transport des Wasserstoffes. Die DE 62412 zeigt als nächstliegender Stand der Technik eine elektrische Heitvorrichtung für Druckluftmaschinen.

Demgegenüber besteht die Aufgabe der vorliegenden Erfindung darin, einen Antrieb mit Elektroofen auszubilden. Ein solcher Antrieb muss in der Lage sein, bezogenen Strom aus dem Netz zu speichern und jeder Zeit mit geringeren Verlusten in nützliche Arbeit umzuwandeln. In Bezug auf Schadstoffe und Geräusche muss es umweltfreundlich sein, muss über einen Energiespeicher mit sehr großer Speicherkapazität im Verhältnis zum Eigengewicht verfügen und muss in der Lage sein in einer relativ sehr kurzen Zeit die verzehrte Energie durch die Arbeitsverrichtung mittels Beziehung von Strom aus dem Netz zu ersetzen.

Die Erfindung löst die gestellten Aufgaben dadurch, dass der Elektroofen mit zwei Öffnungen ausgestattet ist, jeder Zylinder zum Schutz gegen Wärmestrahlung mit zwei Öffnungen ausgestattet ist und in der relevanten Öffnung des Elektroofens eingepasst ist, die Einlassleitung und die Auslassleitung auf der Aussendwand des Gehäuses befestigt sind, die Einlassleitung in einen Zylinder zum Schutz gegen Wärmestrahlung mündet und die Auslassleitung in den zweiten Zylinder zum Schutz gegen Wärmestrahlung mündet, die elektromagnetisch betätigten Sperrorganen werden im Betriebszustand geöffnet und im Ruhezustand völlig gesperrt, wobei ein elektromagnetisch betätigtes Sperrorgan in der Einlassleitung eingebaut ist und der zweite in der Auslassleitung, die Leitung der Vakuumpumpe in die Auslassleitung mündet.

Ein Antrieb mit Elektroofen kann bei Fahrzeugen, Lokomotiven, Traktoren, Walzten, Generatoren, Schiffe, Motorbooten, Motorräder und vielem mehr angewendet werden. Er hat gegenüber dem Verbrennungsmotorantrieb viele Vorteile, wobei er vor allem keine Umweltverschmutzung verursacht und nicht von den teuren, nicht erneuerbaren, Treibstoffen abhängig ist.

Der Elektroofen verwandelt die zugeführte elektrische Energie in Folge der Erhitzung bzw. Verschmelzung der Metallmasse in Wärmeenergie. Die hohen Schmelztemperaturen der Metalle sorgen dafür, dass das Verhältnis der Speicherkapazität des Elektroofens zum Eigengewicht sehr Gross ist. Die eingespeicherte Wärmeenergie wird mittels des Kompressors und des Motors in mechanische Energie verwandelt. Die konsumierte Energie während der Arbeitsverrichtung kann mittels der Intensivierung der Elektrizitätszufuhr innerhalb einer relativ kurzen Zeit ersetzt werden. Das bedeutet, dass die notwendige Zeit für das Tanken relativ kurz ist. Dadurch hat der Elektroofen einen weiteren Vorteil gegenüber traditionellen Batterien.

In der Zeichnung ist der Erfindungsgegenstand beispielsweise dargestellt. Es zeigen:
Fig. 1 eine schematische Seitensicht eines Antriebes mit Elektroofen gemäß der Erfindung.
Fig. 2 eine Teilansicht eines mittels Antrieb mit Elektroofen betriebenen Fahrzeuges mit einen Bügel (Stromabnehmer).
Fig. 3 eine schematische Seitensicht eines Antriebes mit Elektroofen mit einer Gaskomponente.
Fig. 4 eine schematische Seitensicht eines Antriebes mit Elektroofen mit einer Turbine.
Fig. 5 eine schematische Seitensicht eines Antriebes mit Elektroofen mit einer Düse.
Fig. 6 eine schematische Seitensicht zwei Flugzeuge beim Tanken während des Flugs.

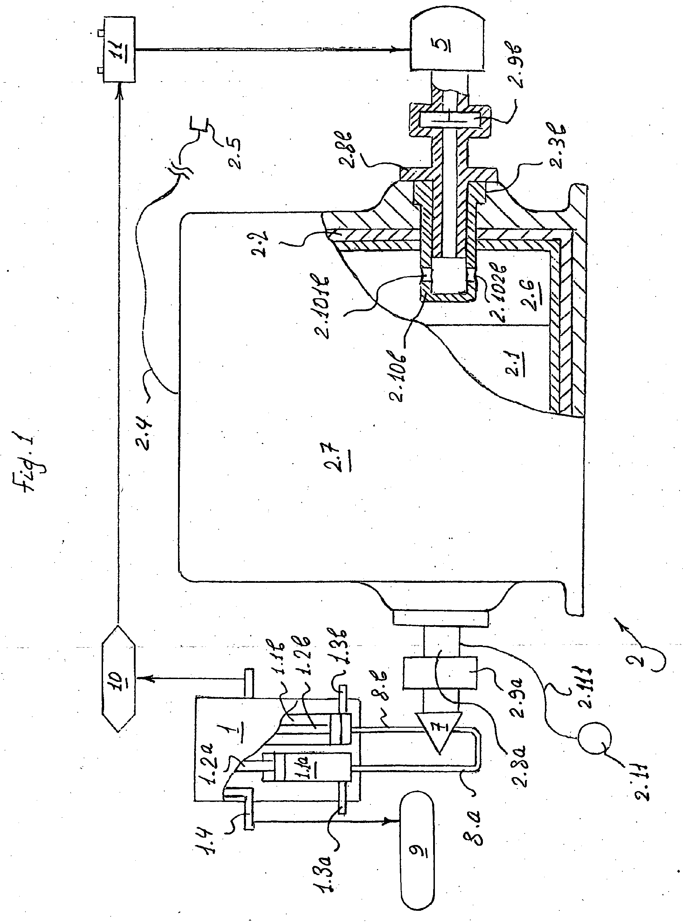

Gemäß Fig. 1 besteht ein Antrieb mit Elektroofen aus den folgenden Hauptbestandteilen: ein Elektroofen 2, ein Kompressor 5, ein Motor 1, eine Antriebswelle 9, eine Lichtmaschine 10 und eine Batterie 11.

Der Elektroofen 2 besteht hauptsächlich aus einer Kammer 2.6 und einem Gehäuse 2.7. Die Kammer 2.6 wird völlig von dem Gehäuse 2.7 mittels einer Schicht aus einem Material zur Eindämmung von Wärme 2.2 isoliert. In der Kammer 2.6 befindet sich eine Metallmasse in Form eines hitzebeständigen Stahls 2.1. Der Elektroofen 2 wird nach Bedarf mittels des Kabels 2.4 und des Steckers 2.5 bzw. des Bügels 2.12, an das Außennetz angeschlossen.

Die Funktion des Elektroofens 2 unterscheidet sich von der Funktion der traditionellen Elektroöfen. Letztere sind für Gießen Legieren, Wärmebehandlung und ähnliches bestimmt. Bei dem Elektroofen 2 geht es um die Umwandlung des bezogenen elektrischen Stroms von dem Außennetz in Wärmeenergie, die Speicherung der gewonnen Wärmeenergie und ihre Wiederausgabe. Der bezogene elektrische Strom wird in Folge der Erhitzung der Metallmasse in Form eines hitzebeständigen Stahls 2.1, in Wärmeenergie umgewandelt. Der hitzebeständige Stahl 2.1 kann ohne Verschmelzung bis zu extrem hohen Temperaturen erhitzt werden. Dabei ist es möglich relativ große Strommengen in Wärmeenergie zu verwandeln. Die gewonnene Wärmeenergie wird in der Kammer 2.6 gespeichert und nach Bedarf unter anderem auf der Basis des Prinzips der Zwangskonvektion entzogen. Daher wird der Elektroofen 2 mit den Öffnungen 2.3a und 2.3b, sowie die Einlassleitung 2.8b und die Auslassleitung 2.8a ausgestattet, damit ein Luftstrom mittels des Kompressors 5 durch die Kammer 2.6 erzeugt werden kann.

Von dem technischen Gesichtspunkt geht es bei der Auswahl der Metallmasse 2.1 und ihre Erhitzungstemperatur, sowie des Typs des Elektroofens 2 und seiner Konstruktion um die Maximierung des Verhältnisses der Speicherkapazität des Elektroofens 2 zum Eigengewicht. Damit die notwendige Zeit für Tanken minimiert werden kann, wird der Energieumsatz (W) des Elektroofens maximiert.

Von großer Bedeutung ist die Konservierung der Wärmeenergie in der Kammer 2.6. Diese Energie kann durch Strahlung, Leitung und Konvektion verloren gehen. Die Schicht, aus einem Material zur Eindämmung von Wärme 2.2, sorgt dafür dass die Wärme nicht durch die Wände der Kammer 2.6 nach außen verloren geht.

Für die Vermeidung von Wärmeverlust durch Strahlung über die Öffnungen 2.3a und 2.3b, sind die Zylinder zum Schutz gegen Wärmestrahlung 2.10a und 2.10b vorgesehen. Die Zylinder zum Schutz gegen Wärmestrahlung 2.10a und 2.10b bestehen aus einem Material zur Eindämmung von Wärme. Der Zylinder zum Schutz gegen Wärmestrahlung 2.10a bzw. 2.10b wird in die Öffnung 2.3a bzw. 2.3b eingepasst. Für die Sicherung eines freien Luftzuges wird der Zylinder 2.10a bzw. 2.10b mit den Öffnungen 2.101a und 2.102a bzw. 2.101b und 2.102b ausgestattet. Die Einlassleitung 2.8b und die Auslassleitung 2.8a werden auf der Außenwand des Gehäuses 2.7 befestigt. Die Einlassleitung 2.8b mündet in den Zylinder zum Schutz gegen Wärmestrahlung 2.10b und die Auslassleitung 2.8a mündet in den Zylinder zum Schutz gegen Wärmestrahlung 2.10a.

Für die Vermeidung von Wärmeverlust im Ruhezustand, durch Konvektion über die Öffnungen 2.3a und 2.3b, sind die elektromagnetisch betätigten Sperrorganen 2.9a und 2.9b und die Vakuumpumpe 2.11 vorgesehen. Die elektromagnetisch betätigten Sperrorganen 2.9a und 2.9b werden im Betriebszustand geöffnet und im Ruhezustand völlig gesperrt. Das elektromagnetisch betätigte Sperrorgan 2.9a bzw. 2.9b wird in die Auslassleitung 2.8a bzw. Einlassleitung 2.8b eingebaut. Die Vakuumpumpe 2.11 wird mit einer Luftleitung 2.111 ausgestattet. Letztere mündet in die Auslassleitung 2.8a. Durch die Betätigung der Vakuumpumpe 2.11 nach der Ausschaltung des Antriebes, wird in der Kammer 2.6 ein Vakuum entstehen. Das entstehende Vakuum sorgt dafür, dass keine Wärme durch Konvektion aus der Kammer 2.6 über die Auslassleitung 2.8a und Einlassleitung 2.8b nach außen verloren gegangen.

Der Motor 1 besteht aus zwei Zylindern 1.1a und 1.1b, zwei Kolben 1.2a und 1.2b, zwei Auslassventilen 1.3a und 1.3b und einer Kurbelwelle 1.4. Die Verbindungsleitung 8a bzw. 8b ist auf einem Ende mit dem Dreiwegventil 7 und auf dem zweiten mit dem Zylinder 1.1a bzw.1.1b verbunden. Das Dreiwegventil 7 wird mit der Auslassleitung 2.8a verbunden. Das Dreiwegventil 7 leitet den erhitzten Luftström aus der Kammer 2.6 einmal durch die Verbindungsleitung 8a und einmal durch die Verbindungsleitung 8b. Der Motor 1, das Dreiwegventil 7, die Verbindungsleitungen 8a und 8b und die Auslassleitung 2.8a, sind mit nicht dargestellten Wärmeisolierschicht bedeckt.

Der Antrieb mit Elektroofen, wird mit Hilfe des Kompressors 5 und des Motors 1 in Betrieb gesetzt. Der Kompressor 5 ist mit der Einlassleitung 2.8b verbunden. Die gepumpte Luft mittels des Kompressors 5 wird in der Kammer 2.6 erhitzt. Das führt zur Steigerung des Drucks in der Kammer 2.6. Bekannt ist, dass der Luftdruck in einem Raum in einer zur steigenden absoluten Erhitzungstemperatur proportional steigt. Daraus folgt, dass je höher die absolute Erhitzungstemperatur der gepumpten Luft ist, desto höher der Druck auf den Zylinder 1.1a bzw. 1.1b. Daran liegt auch die Ursache für eine mögliche gewaltige Erhöhung des Drucks bei der Erhitzung der Metallmasse 2.1 bis zu hohen Temperaturen. Im Falle der Erhitzung der Metallmasse bis zu 6000 C° ist es z.B. möglich, bei einer Lufttemperatur von 20 °C, den erzeugten Druck durch den Kompressor 5 um das einundzwanzigfache nach Erhitzung zu erhöhen.

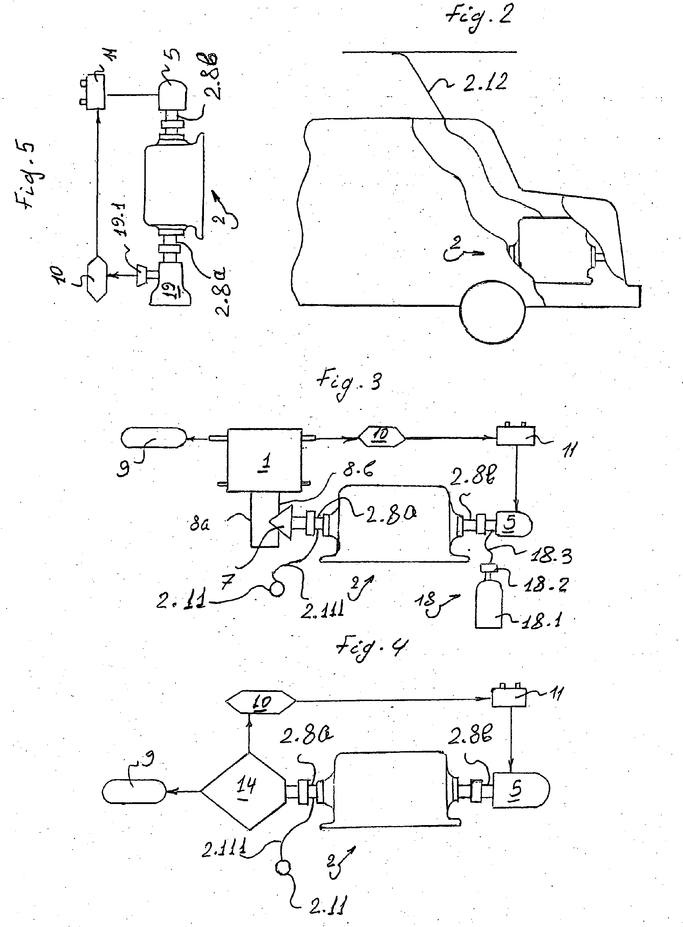

Die Arbeitsweise des Motors 1 ist wie folgt: der erzeugte Druck im Zylinder 1.1 a bzw. 1.1b durch die Betätigung des Kompressors 5 und Erhitzung der gepumpten Luft in der Kammer 2.6 treibt den Kolben 1.2a bzw. 1.2b nach außen und bringt damit die Kurbelwelle 1.4 in Bewegung. Dabei bleibt das Auslassventil 1.3a bzw. 1.3b gesperrt. Das Auslassventil 1.3a bzw. 1.3b wird erst geöffnet, wenn der Kolben 1.2a bzw. 1.2b nach unten getrieben wird. Durch die Arbeit des Motors 1 wird die gespeicherte Wärmeenergie in der Kammer 2.6 in mechanische Energie verwandelt. Die Wärmeenergie kann genauso mittels Turbine oder Düse in mechanische Energie verwandelt werden. Gemäß Fig. 4 ist der Antrieb mit Elektroofen mit einer Turbine 14 ausgestattet. Letztere ist mit der Auslassleitung 2.8a des Elektroofens 2 verbunden. Gemäß Fig. 5 ist der Antrieb mit Elektroofen mit einer Düse 19 ausgestattet. Letztere ist mit der Auslassleitung 2.8a des Elektroofens 2 verbunden und mit einer Turbine 19.1 ausgestattet. Ein Teil des Luftstroms wird aus der Düse 19 durch die Turbine 19.1 eingeleitet. Die erzeugte mechanische Energie mittels der Turbine 19.1 wird für die Lichtmaschine 10 verwendet.

Gemäß Fig. 3 und 4 wird, die durch den Motor 1, bzw. der Turbine 14 erzeugte mechanische Energie hauptsächlich mittels der Antriebswelle 9 für den Antrieb eines Schiffes, einer Lokomotive, eines Fahrzeuges und ähnliches und zum Teil für den Antrieb der Lichtmaschine 10 verwendet. Die Lichtmaschine 10 versorgt den Kompressor 5 über die Batterie 11 mit Strom.

Gemäß Fig. 2 wird ein mittels Antrieb mit Elektroofen betriebenes Fahrzeug mit einem Bügel 2.12 ausgestattet. Dadurch kann ein Elektroofen 2 beim Fahren an das Außennetz angeschlossen werden und dabei die notwendige Zeit für Tanken sparen. Linienbusse können z.B. während der langsamen Fahrt in den stark befahrbaren Straßen und Wartezeiten an den Ampeln und an den Haltestellen tanken.

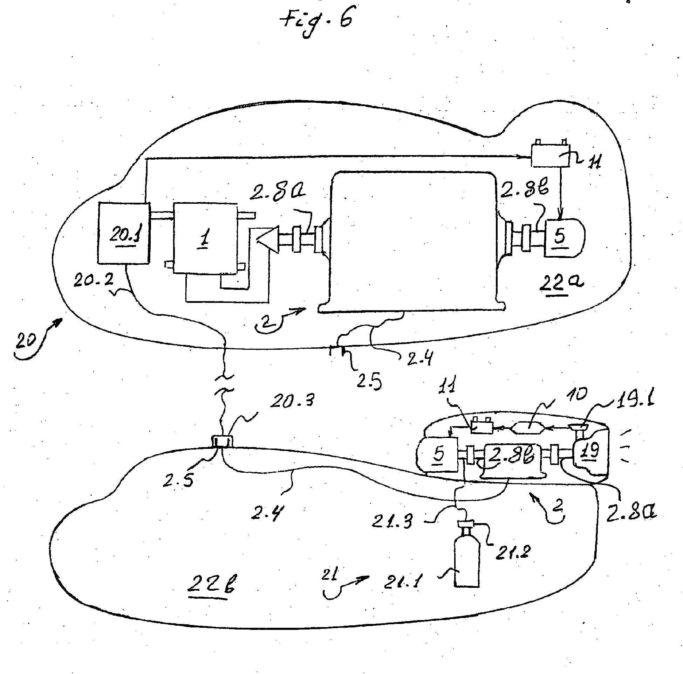

Gemäß Fig. 6 wird ein Flugzeug 22a mit einem Antrieb mit Elektroofen und einer Generatorkomponente 20 ausgestattet. Die Generatorkomponente 20 besteht aus einem Generator 20.1, einem Kabel 20.2 und einem Element zum Stromabgeben 20.3. Der Generator 20.1 wird an dem Motor 1 angeschlossen und versorgt dadurch die Batterie 11 mit Strom. Dadurch kann ein Elektroofen 2 eines zweiten Flugzeuges 22b beim Fliegen an dem Generator 20.1 des Flugzeuges 22a angeschlossen werden.

Gemäß Fig. 3 wird ein Antrieb mit Elektroofen mit einer Gaskomponente 18 ausgestattet. Letztere besteht aus einen Drucktank 18.1, einem Mechanismus zur Schließung, Öffnung und Regelung der Gaszufuhr 18.2 und einer Gasleitung 18.3. Die Gasleitung 18.3 mündet in die Einlassleitung 2.8b. In Folge der Zufuhr von Gas in die Einlassleitung 2.8b während des Arbeitsprozesses, entsteht ein Gemisch aus Luft und Gas. Das Gemisch wird in der Kammer 2.6 angezündet. Dadurch wird der Antrieb mit Elektroofen nach einem Volltanken in der Lage sein, eine zusätzliche Arbeit zu verrichten und damit zusätzliche Distanzen ohne Tanken zurück zu legen. Man kann genauso in der Kammer 2.6 andere alternative Brennstoffe, wie Benzin, Pflanzenöl, Biogas und dergleichen verbrennen.

Gemäß Fig. 6 wird der Antrieb mit Elektroofen des Flugzeuges 22b mit einer Wasserstoffkomponente 21 ausgestattet. Letztere besteht aus einen Drucktank 21.1, einem Mechanismus zur Schließung, Öffnung und Regelung der Gaszufuhr 21.2 und einer Gasleitung 21.3. Die Gasleitung 21.3 mündet in die Einlassleitung 2.8b. In Folge der Zufuhr von verflüssigten Wassersoff in die Einlassleitung 2.8b während des Arbeitsprozesses, entsteht ein Gemisch aus Luft und Wasserstoff. Das Gemisch wird in der Kammer 2.6 angezündet. Das bei der Verbrennung von Wasserstoff, mittels des Sauerstoffs aus der Luft, erzeugte Wasser wird von Bord abgeworfen. Durch die Verbrennung von Wasserstoff wird der Antrieb mit Elektroofen nach einem Volltanken in der Lage sein, einen stärkeren Luftstrom durch die Düse zu erzeugen und zusätzliche Arbeit zu verrichten. Man kann genauso in der Kammer 2.6 andere alternative Brennstoffe, wie Benzin, Pflanzenöl, Biogas und dergleichen verbrennen.

## Patentansprüche

1. Antrieb mit Elektroofen mit einem Elektroofen (2) bestehend aus einer Kammer (2.6), einem Gehäuse (2.7), einer Schicht aus einem Material zur Eindämmung von Wärme (2.2), einer Metallmasse in Form eines hitzebeständigen Stahl (2.1), einer Einlassleitung (2.8b), einer Auslassleitung (2.8a), zwei Zylindern zum Schutz gegen Wärmestrahlung (2.10a, 2.10b), zwei elektromagnetisch betätigten Sperrorganen (2.9a, 2.9b), einer Vakuumpumpe (2.11), einem Kabel (2.4) und einem Stecker (2.5) bzw. einem "Bügel (Stromabnehmer)" (2.12), einem Kompressor (5), einem Dreiwegventil (7), zwei Verbindungsleitungen (8a, 8b), einem Motor (1) bestehend aus zwei Zylindern (1.1a, 1.1b), zwei Kolben (1.2a, 1.2b), zwei Auslassventilen (1.3a, 1.3b) und einer Kurbelwelle (1.4), einer Antriebswelle (9), einer Lichtmaschine (10) und einer Batterie (11) **dadurch gekennzeichnet, dass** der Elektroofen (2) mit zwei Öffnungen (2.3a, 2.3b) ausgestaltet ist, der Zylinder zum Schutz gegen Wärmestrahlung (2.10a) bzw. (2.10b), welcher mit den Öffnungen (2.101a, 2.102a) bzw. (2.101b, 2.102b) ausgestattet ist, in der Öffnung (2.3a) bzw. (2.3b) eingepasst ist, die Einlassleitung (2.8b) und die Auslassleitung (2.8a) auf der Außenwand des Gehäuse (2.7) befestigt sind, wobei die Einlassleitung (2.8b) in den Zylinder zum Schutz gegen Wärmestrahlung (2.10b) mündet und die Auslassleitung (2.8a) in den Zylinder zum Schutz gegen Wärmestrahlung (2.10a) mündet, die elektromagnetisch betätigten Sperrorganen (2.9a, 2.9b) im Betriebszustand geöffnet und im Ruhezustand völlig gesperrt sind, wobei das elektromagnetisch betätigte Sperrorgan (2.9a) bzw. (2,9b) in der Auslassleitung (2.8a) bzw. Einlassleitung (2.8b) eingebaut ist, die Luftleitung der Vakuumpumpe (2.111) in die Auslassleitung (2.8a) mündet.

2. Antrieb mit Elektroofen nach Anspruch 1, **dadurch gekennzeichnet, dass** der Elektroofen (2) imstande ist die erzeugte Wärmeenergie durch das Erhitzen von dem hitzebeständigen Stahl (2.1) mittels bezogener Elektroenergie von dem Außennetz mittels des Kabels (2.4) und des Steckers (2.5) bzw. des Bügels (2.12) in dem Kammer (2.6) zu speichern und sie nach Bedarf zu entziehen.

3. Antrieb mit Elektroofen nach der Ansprüche 1 und 2, **dadurch gekennzeichnet, dass** der Kompressor (5) mit der Einlassleitung (2.8b) verbunden ist, das Dreiwegventil (7) mit der Auslassleitung (2.8a) verbunden ist, jede Verbindungsleitung (8a, 8b) auf einem Ende mit dem Dreiwegventil (7) und auf dem zweiten mit dem relevanten Zylinder (1.1a, 1.1b) verbunden ist.

4. Antrieb mit Elektroofen nach der Ansprüche 1 - 3, **dadurch gekennzeichnet, dass** die Turbine (14) mit der Auslassleitung (2.8a) verbunden ist.

5. Antrieb mit Elektroofen nach der Ansprüche 1 - 4, **dadurch gekennzeichnet, dass** die Antriebswelle (9) und die Lichtmaschine (10), welche die Batterie (11) mit Strom versorgt, mittels des Motors (1) bzw. der Turbine (14) getrieben sind, wobei die Batterie (11) dem Kompressor (5) mit Strom versorgt.

6. Antrieb mit Elektroofen nach der Ansprüche 1 - 5, **dadurch gekennzeichnet, dass** die Gaskomponente (18) bzw. die Wasserstoffkomponente (21) aus einem Drucktank (18.1) bzw. (21.1), einem Mechanismus zur Schließung, Öffnung und Regelung der Gaszufuhr (18.2) bzw. (21.2) und einer Leitung (18.3) bzw. (21.3) besteht, wobei die Leitung (18.3) bzw. (21.3) in die Einlassleitung (2.8b) mündet.

7. Antrieb mit Elektroofen nach der Ansprüche 1 - 6, **dadurch gekennzeichnet, dass** die Düse (19) mit der Auslassleitung (2.8a) verbunden ist und die Turbine (19.1), welche an die Düse (19) angeschlossen ist, die Lichtmachine (10) antreibt.

8. Antrieb mit Elektroofen nach der Ansprüche 1 - 7, **dadurch gekennzeichnet, dass** der Generator (20.1), welcher mit einem Kabel (20.2) und einem Element zum Stromabgeben (20.3) ausgestattet ist, an dem Motor (1) angeschlossen ist.

## Claims

1. Power drive based on electric furnace with an electric furnace (2) comprising a chamber (2.6), a housing (2.7), a layer from a material for thermal containment (2.2), a metal mass in the form of heat-resistant steel (2.1), an inlet line (2.8b), an outlet line (2.8a), two cylinders for protection against thermal radiation (2.10a, 2.10b), two electromagnetically operating closing bodies (2.9a, 2.9b), a vacuum pump (2.11), a cable (2.4) and a plug (2.5) or a "bracket (current collector)" (2.12), a compressor (5), a three-way valve (7), two connecting pipes (8a, 8b), a motor (1) comprising two cylinders (1.1a, 1.1b), two pistons (1.2a, 1.2b), two outlet valves (1.3a, 1.3b) and a crankshaft (1.4), a drive shaft (9), an alternator (10) and a battery (11), *wherein* the electric furnace (2) is provided with two openings (2.3a, 2.3b), the cylinder for protection against thermal radiation (2.10a) or (2.10b), which is provided with the openings (2.101a, 2.102a) or (2.101b, 2.102b), is fitted into the opening (2.3a) or (2.3b), the inlet line (2.8b) and the outlet line (2.8a) are fastened to the outer wall of the housing (2.7), whereby the inlet line (2.8b) is fitted into the cylinder for protection against thermal radiation (2.10b) and the outlet line (2.8a) is fitted into the cylinder for protection against thermal radiation (2.10a), in operating state the electromagnetically operating closing bodies (2.9a, 2.9b) are opened and in the state of rest are completely closed, whereby the electromagnetically operating closing body (2.9a) is inserted in the outlet line (2.8a) and the electromagnetically operating closing body (2,9b) is inserted in the inlet line (2.8b), the air hose of the vacuum pump (2.111) is connected to the outlet line (2.8a).

2. Power drive based on electric furnace according to claim 1, *wherein* the electric furnace (2) is in a position to store the generated heat energy as a result of heating the heat-resistant steel (2.1) by means of the delivered current from the network by means of the cable (2.4) and the plug (2.5) or the bracket (2.1) and to retrieve it in response to the demand.

3. Power drive based on electric furnace according to claims 1 and 2, *wherein* the compressor (5) is connected to the inlet line (2.8b), the three-way valve (7) is connected to the outlet line (2.8a), each connecting pipe (8a, 8b) on an end is connected to the three-way valve (7) and on the second with the relevant cylinder (1.1a, 1.1b).

4. Power drive based on electric furnace according to claims 1 - 3, *wherein* the turbine (14) is connected to the outlet line (2.8a).

5. Power drive based on electric furnace according to claims 1 - 4, *wherein* the drive shaft (9) and the alternator (10), which supplies the battery (11) with current are driven, by means of the motor (1) or a turbine (14), whereby the battery (11) supplies the compressor (5) with current.

6. Power drive based on electric furnace according to claims 1 - 5, *wherein* the gas components (18) or the hydrogen components (21) comprise a pressure tank (18.1) or (21.1), a mechanism of closing, opening and controlling the gas supply (18.2) or (21.2) and a gas hose (18.3) or (21.3), whereby the gas hose (18.3) or (21.3) is connected to the inlet line (2.8b).

7. Power drive based on electric furnace according to claims 1 - 6, *wherein* the nozzle (19) is connected to the outlet line (2.8a) and the turbine (19.1), which is connected to the nozzle (19), drives the alternator (10).

8. Power drive based on electric furnace according to claims 1 - 7, *wherein* the generator (20.1), which is provided with the cable (20.2) and an element for current delivering (20.3) is connected to the motor (1).

## Revendications

1. Propulsion par four électrique avec four électrique (2) composé d'une chambre (2.6), d'une carcasse (2.7), d'une couche de matériau isolant thermique (2.2), d'une masse métallique en acier résistant à la chaleur (2.1), d'un conduit d'admission (2.8b), d'un conduit d'échappement (2.8a), de deux cylindres de protection contre le rayonnement thermique (2.10a, 2.10b), de deux éléments verrouillants à commande électromagnétique (2.9a, 2.9b), d'une pompe à vide (2.11), d'un câble (2.4) et d'une prise mâle (2.5) ou d'un « pantographe (prise de courant) » (2.12), d'un compresseur (5), d'une vanne trois voies (7), de deux joncteurs (8a, 8b), d'un moteur (1) composé de deux cylindres (1.1a, 1.1b), deux pistons (1.2a, 1.2b), deux soupapes d'échappement (1.3a, 1.3b) et d'un vilebrequin (1.4), d'un arbre de transmission (9), d'un alternateur (10) et d'une batterie (11) **se caractérisant par le fait que** le four électrique (2) est équipé de deux ouvertures (2.3a, 2.3b), que le cylindre de protection contre le rayonnement thermique (2.10a) ou (2.10b), lui-même équipé des ouvertures (2.101a, 2.102a) ou (2.101b, 2.102b), est encastré dans l'ouverture (2.3a) ou (2.3b), que le conduit d'admission (2.8b) et le conduit d'échappement (2.8a) sont fixés sur là paroi extérieure de la carcasse (2.7), le conduit d'admission (2.8b) débouchant alors dans le cylindre de protection contre le rayonnement thermique (2.10b) et le conduit d'échappement (2.8a) débouchant dans le cylindre de protection contre le rayonnement thermique (2.10a), les éléments verrouillants à commande électromagnétique (2.9a, 2.9b) sont ouverts en marche et complètement verrouillés à l'arrêt, l'élément verrouillant à commande électromagnétique (2.9a) ou (2,9b) étant alors intégré au conduit d'échappement (2.8a) ou au conduit d'admission (2.8b), la conduite d'air de la pompe à vide (2.111) débouche dans le conduit d'échappement (2.8a).

2. Propulsion par four électrique selon l'exigence 1, **se caractérisant par le fait que** le four électrique (2) est en mesure d'emmagasiner et, en cas de besoin, de soustraire dans la chambre (2.6) l'énergie thermique générée par la montée en température de l'acier résistant à la chaleur (2.1) à partir de l'énergie électrique tirée du réseau extérieur au moyen du câble (2.4) et de la prise mâle (2.5) ou du pantographe (2.12).

3. Propulsion par four électrique selon les exigences 1 et 2, **se caractérisant par le fait que** le compresseur (5) est relié au conduit d'admission (2.8b), que la vanne trois voies (7) est reliée au conduit d'échappement (2.8a), que chaque joncteur (8a, 8b) est relié à une de ses extrémités à là vanne trois voies (7) et à l'autre au le cylindre (1.1a, 1.1b) correspondant.

4. Propulsion par four électrique selon les exigences 1 - 3, **se caractérisant par le fait que** la turbine (14) est reliée au conduit d'échappement (2.8a).

5. Propulsion par four électrique selon les exigences 1 - 4, **se caractérisant par le fait que** l'arbre de transmission (9) et l'alternateur (10), qui alimente la batterie (11) en électricité, sont entraînés par le moteur (1) ou la turbine (14), la batterie (11) alimentant alors le compresseur (5) en électricité.

6. Propulsion par four électrique selon les exigences 1 - 5, **se caractérisant par le fait que** le composant gaz (18) ou le composant hydrogène (21) consiste en un réservoir sous pression (18.1) ou (21.1), un mécanisme de fermeture, ouverture et régulation de l'arrivée de gaz (18.2) ou (21.2) et un câble (18.3) ou (21.3), le câble (18.3) ou (21.3) débouchant alors dans le conduit d'admission (2.8b).

7. Propulsion par four électrique selon les exigences 1 - 6, **se caractérisant par le fait que** l'injecteur (19) est relié au conduit d'échappement (2.8a) et que la turbine (19.1), qui est reliée à l'injecteur (19), entraîne l'alternateur (10).

8. Propulsion par four électrique selon les exigences 1 - 7, **se caractérisant par le fait que** le générateur (20.1), qui est équipé d'un câble (20.2) et d'un élément distributeur de courant (20.3), est relié au moteur (1).
